# EUROPÄISCHE PATENTSCHRIFT

(11) **EP 2 371 023 B1**
(45) Veröffentlichungstag und Bekanntmachung des Hinweises auf die Patenterteilung: **11.12.2013**
(21) Anmeldenummer: 09799233.3
(22) Anmeldetag: 23.12.2009
(51) Int. Cl.: H01M 8/04, H01M 8/24

(54) **VERFAHREN UND VORRICHTUNG ZUM AUSTRAGEN VERBRAUCHTER UND ZUM TEIL EXPLOSIONSFÄHIGER BETRIEBSMEDIEN EINER BRENNSTOFFZELLE**
METHOD AND APPARATUS FOR DISCHARGING USED OPERATING MEDIA OF A FUEL CELL, SOME OF WHICH ARE EXPLOSIVE
PROCÉDÉ ET DISPOSITIF POUR ÉVACUER LES AGENTS DE FONCTIONNEMENT USÉS ET, EN PARTIE, EXPLOSIFS D'UNE PILE À COMBUSTIBLE

(30) Priorität: 30.12.2008 AT 20272008
(43) Veröffentlichungstag der Anmeldung: 05.10.2011
(73) Patentinhaber: Fronius International GmbH, 4643 Pettenbach (AT)
(72) Erfinder: BUCHINGER, Martin, 4672 Bachmanning (AT); KRUMPHUBER,Mario, 4621 Sipbachzell (AT); RUMPL, Werner, A-4616 Weisskirchen (AT); SCHMITSBERGER, Thomas, A-4650 Lambach (AT); WAHLMÜLLER, Ewald, A-4020 Linz (AT)
(74) Vertreter: Sonn & Partner Patentanwälte
(86) Internationale Anmeldenummer: PCT/AT2009/000496
(87) Internationale Veröffentlichungsnummer: WO 2010/075602

(56) Entgegenhaltungen:
- WO-A2-2005/041336
- JP-A- 8 031 436
- JP-A- 2003 132 916
- US-A1- 2007 087 241
- US-A1- 2008 156 549

## Beschreibung

Die Erfindung betrifft ein Verfahren zum Austragen verbrauchter und zumindest zum Teil explosionsfähiger Betriebsmedien einer Brennstoffzelle in einem Brennstoffzellensystem, wobei die Betriebsmedien aus einem Betriebsraum des Brennstoffzellensystems vor dem Austragen von einer Sensoreinheit auf dessen Explosionsfähigkeit überprüft werden, und das Austragen von einem zwischen dem Betriebsraum und einer Mischzone angeordneten Lüfter durchgeführt wird, und vom Lüfter zur Belüftung ein Spülmedium durch den Betriebsraum gesaugt wird, welches Spülmedium vor dem Austragen mit den Betriebsmedien in der Mischzone zu einer Abluft vermischt und diese Abluft aus der Mischzone ausgetragen wird.

Ebenso betrifft die Erfindung eine Vorrichtung zum Austragen verbrauchter und zumindest zum Teil explosionsfähiger Betriebsmedien einer Brennstoffzelle in einem Brennstoffzellensystem, mit einer Sensoreinheit zur Überprüfung der aus einem Betriebsraum ausgetragenen Betriebsmedien auf dessen Explosionsfähigkeit, wobei eine Mischzone zur Vermischung der Betriebsmedien mit einem Spülmedium zu einer Abluft vorgesehen ist, wobei der Betriebsraum durch einen Lüfter abgeschlossen ist, und die Sensoreinheit in Strömungsrichtung der Abluft gesehen hinter der Mischzone angeordnet ist.

Die US 2008/156549 A1 beschreibt eine Einrichtung zur Belüftung von Brennstoffzellensystemen, wobei brennbare Gase durch einen steten Luftstrom, der durch ein saugendes Gebläse erzeugt wird, aus dem Gehäuse ausgetragen werden. Mittels eines Sensors werden überhöhte Konzentrationen am brennbaren Gas detektiert, so dass das System bei Überschreitung eines Grenzwerts entweder aus dem laufenden Betrieb heruntergefahren oder ein Hochfahren des Systems verhindert werden kann.

Die WO 2005/041336 A2 zeigt ein Brennstoffzellensystem mit einem Gehäuse mit einem abzugartigen Aufbau zur effizienten Akkumulierung von leicht flüchtigen Gasen wie Wasserstoff.

Die JP 2003132916 beschreibt ein Brennstoffzellensystem mit einem belüfteten Gehäuse zur Erhöhung der Luftzufuhr im Falle einer überhöhten Wasserstoffkonzentration.

Die JP 08031436 A beschreibt ein Brennstoffzellensystem mit einem im Inneren eines Gehäuses angeordneten Lüfter zum Ansaugen von Luft als Spülgas zur Verminderung der Explosionsfähigkeit eines Gasgemischs.

Schließlich zeigt die US 2007/0087241 A1 ein Brennstoffzellensystem mit einem Gebläse zum Abführen explosionsfähiger Gase und einem Sensor zur Messung der Wasserstoffkonzentration.

Aus der DE 100 31 238 A1 ist bekannt, dass ein Brennstoffzellensystem mit einem Spülmedium gespült wird, sodass das Brennstoffzellensystem belüftet wird. Dies erfolgt durch einen explosionsgeschützten Lüfter. Dadurch können Ansammlungen von Wasserstoff, welche beispielsweise durch Leckagen entstehen können, vermieden werden. Derartige Ansammlungen werden bevorzugt durch die Anordnung von Wasserstoffsensoren erkannt.

Nachteilig ist hierbei, dass das Brennstoffzellensystem nur gespült und eine Erhöhung des Wasserstoffgehalts erkannt wird. Damit können lediglich Leckagen des Brennstoffzellensystems, welche die Explosionsfähigkeit des Spülmediums erhöhen, erkannt werden. Dies ist allerdings bei einem Normalbetrieb des Brennstoffzellensystems nicht der Fall. Allerdings ist es zumindest während des Normalbetriebs des Brennstoffzellensystems mit einer PEM (Polymer-Elektrolytmembran)-Brennstoffzelle erforderlich, explosionsfähige Wasserstoffanteile in die Umgebung auszutragen. Zur Einhaltung der Sicherheitsvorschriften ist eine zusätzliche Einrichtung erforderlich.

Aus der EP 1 416 567 B1 ist eine Abgasbehandlungseinrichtung für eine Brennstoffzelle bekannt, bei der eine Anodenleitung für den aus der Brennstoffzelle abgeführten Wasserstoff in einen Verdünner geführt ist, in welchem der Wasserstoff mit Teilen aus dem Betriebsgas Luft vermischt wird. Das Gemisch wird mit der Strömung des Kathoden-Abgases über einen Sensor ausgetragen.

Nachteilig dabei ist, dass die Strömung des Kathoden-Abgases unmittelbar mit dem Betrieb des Brennstoffzellensystems zusammenhängt, weshalb dieser nicht unabhängig vom Brennstoffzellensystem geregelt werden kann.

Die Aufgabe der Erfindung besteht darin, die beim Betrieb der Brennstoffzelle gebildeten und auszutragenden explosionsfähigen Anteile der Betriebsmedien unabhängig vom Betrieb des Brennstoffzellensystems und unter Berücksichtigung der Sicherheitsvorschriften aus dem Brennstoffzellensystem auszutragen. Nachteile bekannter Verfahren oder Vorrichtungen sollen vermieden oder zumindest reduziert werden.

Die Aufgabe der Erfindung wird in verfahrensmäßiger Hinsicht dadurch gelöst, dass in der Mischzone ein flüssiger Teil der Betriebsmedien über einen Kühler mit einer thermisch überwachten Verdunstungseinrichtung geleitet und verdunstet wird. Das Verfahren kann sehr einfach durchgeführt werden. So werden die Betriebsmedien mit dem Spülmedium vor dem Austragen aus dem Brennstoffzellensystem vermischt und gemeinsam ausgetragen. Dadurch wird die Explosionsfähigkeit der Betriebsmedien vor der Überprüfung durch die Sensoreinheit soweit reduziert, dass diese gefahrlos und kontrolliert aus dem Brennstoffzellensystem ausgetragen werden können. Während eines Normalbetriebs des Brennstoffzellensystems kann die Explosionsfähigkeit permanent unter einem Grenzwert gehalten werden. Somit können auch laufend Messergebnisse geliefert werden, sodass eine Gefahr aufgrund veränderter Messergebnisse sehr zuverlässig erkannt werden kann. Von Vorteil ist aber auch, dass der Lüfter derart betrieben bzw. angeordnet wird, dass sich der Betriebsraum auf der Saugseite des Lüfters befindet. So können Wasserstoff-Leckagen im Betriebsraum, wie beispielsweise Membranleckagen, mit Hilfe der Sensoreinheit erkannt bzw. überwacht werden, da eine gemeinsame Austragung erfolgt. Ebenso kann dadurch das Brennstoffzellensystem in einen sicheren Zustand geschaltet werden. Dadurch, dass sich die Mischzone auf der Druckseite des Lüfters befindet und der Lüfter somit den Betriebsraum von der Mischzone trennt, enthält der Betriebsraum im Normalbetrieb keine explosionsfähigen Anteile und wird gleichzeitig durch das Spülmedium belüftet. Vorteilhafterweise wird der Lüfter nicht der zumindest teilweise kondensierenden und eher heißen Kathodenabluft ausgesetzt, wodurch dieser weniger beansprucht wird und dessen Lebensdauer entsprechend verlängert wird. Die Leistung des Lüfters kann auch gering gehalten werden, da zur Austragung der Abluft gegebenenfalls auch die Strömung der Kathodenabluft beiträgt.

Die Strömung der Abluft wird vorzugsweise von der vom Lüfter geregelten Strömung des Spülmediums bestimmt. Somit kann die Vermischung der Betriebsmedien mit dem Spülmedium durch Veränderung der Strömung des Spülmediums, insbesondere dem Strömungsvolumen, beeinflusst werden.

Vorteilhafterweise wird der Lüfter in Abhängigkeit der Explosionsfähigkeit der Abluft geregelt.

Die verbrauchten Betriebsmedien werden zumindest aus einem gasförmigen Teil einer Kathodenabluft und einem explosionsfähigen gasförmigen Teil eines Anodengemischs gebildet.

Wenn in der Mischzone der explosionsfähige und gasförmige Teil des Anodengemischs der Brennstoffzelle mit dem Spülmedium und der Kathodenabluft zur Abluft vermischt wird, ist eine zweifache Reduzierung der Explosionsfähigkeit durch Verdünnung mit dem Spülmedium einerseits und Minimierung des Sauerstoffgehalts durch die Kathodenabluft andererseits gegeben. Ebenso wirkt der Feuchtigkeitsgehalt in der Kathodenabluft der Explosionsfähigkeit des Gemischs entgegen. Durch das Leiten eines flüssigen Teils der Betriebsmedien über einen Kühler mit einer thermisch überwachten Verdunstungseinrichtung kann der flüssige Teil mit dem gasförmigen Teil gemeinsam aus der Brennstoffzelle ausgetragen werden.

Wenn mit einer periodischen Beimischung des Anodengemischs in der Mischzone die Regelung des Lüfters angepasst wird, kann die Explosionsfähigkeit der ausgetragenen Abluft im Normalbetrieb im Wesentlichen konstant gehalten werden, da die Erhöhung der Explosionsfähigkeit mit der periodischen Beimischung des Anodengemischs ausgeglichen wird.

Um die Funktion des Lüfters überprüfen zu können, kann die Strömung des Spülmediums gemessen werden.

Vorteilhafterweise wird ein Wert der Explosionsfähigkeit der ausgetragenen Abluft zur Inbetriebnahme des Brennstoffzellensystems herangezogen.

Gemäß einem weiteren Merkmal der Erfindung ist vorgesehen, dass in oder vor der Mischzone ein flüssiger Teil der verbrauchten Betriebsmedien durch einen Abscheider vom gasförmigen Teil der verbrauchten Betriebsmedien getrennt wird und die gasförmigen Teile unabhängig vom Betrieb des Brennstoffzellensystems abgeleitet werden.

Dabei kann mit den verbrauchten Betriebsmedien in dem vor der Mischzone angeordneten Abscheider eine Vormischung durchgeführt werden und die vorgemischten verbrauchten Betriebsmedien in die Mischzone geleitet werden.

Die Aufgabe der Erfindung wird auch durch eine oben genannte Vorrichtung zum Austragen verbrauchter und zumindest zum Teil explosionsfähiger Betriebsmedien einer Brennstoffzelle in einem Brennstoffzellensystem gelöst, bei der zwischen der Mischzone und der Sensoreinheit ein Kühler mit einer thermisch überwachten Verdunstungseinrichtung angeordnet ist. Die Vorteile einer derartigen Vorrichtung können der obigen Beschreibung der Vorteile des Verfahrens entnommen werden.

Die Mischzone ist vorzugsweise in einem Kanal angeordnet, wobei an einem als Auslass des Betriebsraumes ausgebildeten Ende des Kanals der Lüfter montiert ist und ein zweites Ende des Kanals zum Austragen der Abluft ausgebildet ist.

Die vorliegende Erfindung wird anhand der beigefügten, schematischen Zeichnungen näher erläutert. Darin zeigen:
Fig. 1 den schematischen Aufbau eines Brennstoffzellensystems;
Fig. 2 das Austragen der verbrauchten Betriebsmedien, schematisch dargestellt;
Fig. 3 das Prinzip der erfindungsgemäßen Austragung verbrauchter Betriebsmedien einer Brennstoffzelle, schematisch dargestellt;
Fig. 4 eine erste Ausführungsform der erfindungsgemäßen Austragung, schematisch dargestellt; und
Fig. 5 eine zweite Ausführungsform der erfindungsgemäßen Austragung, schematisch dargestellt.

Einführend wird festgehalten, dass gleiche Teile der Ausführungsbeispiele mit gleichen Bezugszeichen versehen werden.

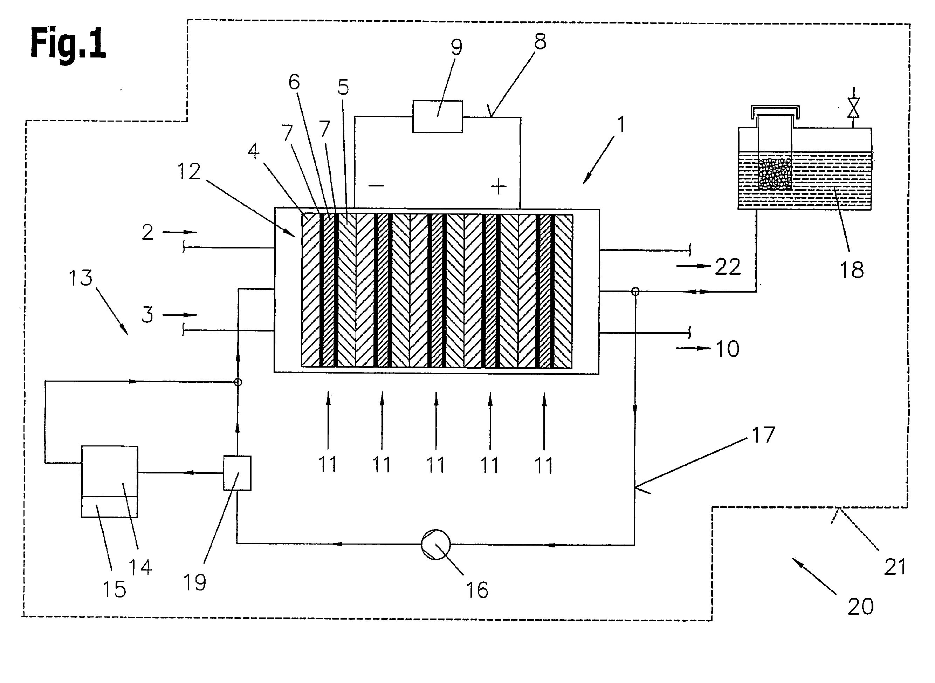

In Fig. 1 ist eine Brennstoffzelle 1 zur Erzeugung von Strom aus Wasserstoff 2 und Sauerstoff 3 bzw. Luft 3 dargestellt. Im Allgemeinen sind Brennstoffzellen 1 elektrochemische Stromerzeuger, die direkt aus einer chemischen Reaktion Strom erzeugen. Dies erfolgt durch Umkehrung der elektrolytischen Zersetzung des Wassers, bei der durch einen Stromfluss die Gase Wasserstoff 2 und Sauerstoff 3 gebildet werden. In der Brennstoffzelle 1 reagieren also die Betriebsmedien Wasserstoff 2 und Sauerstoff 3 miteinan der, wodurch Strom erzeugt wird. Hierzu wird an einer Anode 4 der Wasserstoff 2 und an einer Kathode 5 der Sauerstoff 3 zugeführt, wobei die Anode 4 und die Kathode 5 durch einen Elektrolyt 6 getrennt sind. Des weiteren sind die Anode 4 und die Kathode 5 an der dem Elektrolyt 6 zugewandten Seite mit einem Katalysator 7, meist aus Platin, beschichtet. Dadurch kann der Wasserstoff 2 mit dem Sauerstoff 3 reagieren, wobei dies in zwei getrennten Einzelreaktionen an den beiden Elektroden, Anode 4 und Kathode 5, erfolgt.

An der Anode 4 wird der Wasserstoff 2 zugeführt, wobei der Wasserstoff 2 am Katalysator 7 reagiert und sich je ein Wasserstoffmolekül in zwei Wasserstoffatome spaltet. Ein Wasserstoffatom weist zwei Bestandteile, ein negativ geladenes Elektron und ein positiv geladenes Proton, auf. Bei der Reaktion gibt jedes Wasserstoffatom sein Elektron ab. Die positiv geladenen Protonen diffundieren durch den Elektrolyt 6, welcher für die negativ geladenen Elektronen undurchlässig ist, zur Kathode 5.

An der Kathode 5 wird bzw. werden zeitgleich zum Wasserstoff 2 an der Anode 4 Sauerstoff 3 bzw. Sauerstoffmoleküle, zugeführt. Die Sauerstoffmoleküle reagieren am Katalysator 7 und teilen sich jeweils in zwei Sauerstoffatome, welche sich an der Kathode 5 ablagern.

Somit lagern sich an der Kathode 5 die positiv geladenen Protonen des Wasserstoffs 2 sowie die Sauerstoffatome und an der Anode 4 die negativ geladenen Elektronen des Wasserstoffs 2 ab. Dadurch herrscht an der Kathode 5 ein so genannter Elektronenmangel und an der Anode 4 ein so genannter Elektronenüberschuss. Die Anode 4 entspricht also einem Minuspol (-) und die Kathode 5 einem Pluspol (+). Verbindet man nun die beiden Elektroden, also die Anode 4 und die Kathode 5, mit einem elektrischen Leiter 8, so wandern die Elektronen aufgrund des Potenzialunterschiedes über den elektrischen Leiter 8 von der Anode 4 zur Kathode 5. Es fließt also elektrischer Strom bzw. Gleichstrom, der einem in der Leitung 8 vorgesehenen Verbraucher 9 zugeführt werden kann. Der Verbraucher 9 kann beispielsweise durch eine Batterie, die den produzierten Strom speichert, oder einen Wechselrichter, welcher den produzierten Gleichstrom in Wechselstrom umwandelt, gebildet sein.

Zwei Elektronen, welche über den elektrischen Leiter 8 von der Anode 4 zur Kathode 5 gewandert sind, werden jeweils von einem Sauerstoffatom in der Kathode 5 aufgenommen und werden zu zweifach negativ geladenen Sauerstoff-Ionen. Diese Sauerstoff-Ionen vereinigen sich mit den positiv geladenen Protonen des Wasserstoffs 2, welche durch den Elektrolyt 6 von der Anode 4 auf die Kathode 5 diffundiert sind, zu Wasser 10. Das Wasser 10 wird als so genanntes Reaktionsendprodukt aus der Kathode 5 ausgeschieden.

In einer Zelle 11 der Brennstoffzelle 1 reagieren also die Reaktionsgase Wasserstoff 2 und Sauerstoff 3 miteinander, wodurch Strom erzeugt wird. Eine Zelle 11 wird durch Anode 4, Kathode 5, Elektrolyt 6 und dem Katalysator 7 gebildet. Werden mehrere Zellen 11 in Reihenschaltung miteinander verbunden, wird ein derartiger Aufbau im Allgemeinen als ein Stack 12 bezeichnet. Demzufolge wird also vom Stack 12 während des Betriebs der Brennstoffzelle 1 Strom erzeugt.

Durch die Reaktionen von Wasserstoff 2 mit Sauerstoff 3 in den einzelnen Zellen 11 des Stacks 12 entsteht Wärme, die abgeführt werden muss. Dies erfolgt über ein Kühlsystem 13, das in ihrer einfachsten Form aus einem Kühler 14, einem Lüfter 15 und einer Pumpe 16 in einem Kühlkreislauf 17 besteht. Dabei pumpt die Pumpe 16 ein im Kühlkreislauf 17 und in einem Ausgleichsbehälter befindliches Kühlmittel 18 durch den Stack 12 der Brennstoffzelle 1, beispielsweise in die Richtung gemäß den Pfeilen. Das Kühlmittel 18 entzieht dem Stack 12 die Wärme und nimmt diese auf. Der Kühler 14 im Kühlkreislauf 17, welcher durch den Lüfter 15 gekühlt wird, entzieht wiederum dem Kühlmittel 18 die Wärme und gibt diese an die Umgebung ab, sodass das Kühlmittel 18 erneut dem Stack 12 die Wärme entziehen kann. Der Kühlkreislauf 17 kann auch derart geregelt sein, dass das Kühlmittel 18 nur dann den Kühler 14 durchströmt, wenn das Kühlmittel 18 eine gewisse Temperatur aufweist. Diese Regelung erfolgt dementsprechend über ein Thermostat 19.

Ein derartiges Brennstoffzellensystem 20 kann in einem Gehäuse 21 angeordnet sein. In einem realen Betrieb der Brennstoffzelle 1 kann der in die Anode 4 einströmende Wasserstoff 2 allerdings nicht restlos verbraucht werden, da Sauerstoff 3 - eigentlich meist Luft mit entsprechenden Inertgasen (wie Stickstoff, Argon und Kohlenstoffdioxid) - von der Kathode 5 durch den Elektrolyt 6 bzw. die Elektrolytmembran 6 zur Anode 4 diffundiert und dort mit dem Wasserstoff 2 zu Wasser 10 reagiert. Hauptsächlich wird dies durch Konzentrations- und Druckgradienten zwischen Anode 4 und Kathode 5, sowie durch eine sehr geringe Schichtdicke (<100µm) der verwendeten Elektrolytmembranen 6 bewirkt. Dementsprechend diffundiert ebenso der Wasserstoff 2 durch die Membran 6 zur Kathode 5 und Wasser 10 wird gebildet. Grundsätzlich dient das in Anode 4 und Kathode 5 entstehende Wasser 10 zu deren Befeuchtung. Da das Wasser 10 jedoch kontinuierlich durch die Reaktion von Wasserstoff 2 und Sauerstoff 3 entsteht, sammelt sich dieses in den Elektroden an und senkt die Spannung der Zelle 11. Daher muss das Wasser 10 aus den Elektroden entfernt bzw. ausgetragen werden.

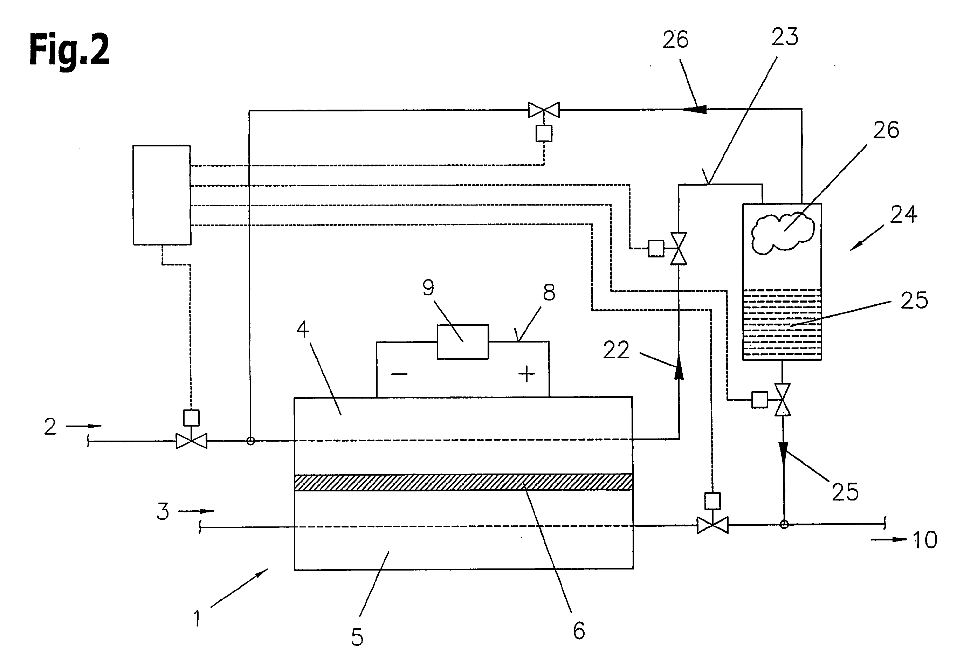

Das Austragen aus der Anode 4 erfolgt nun derart, dass das Gemisch 22 aus Wasser 10, die Inertgase und einem Teil des Wasserstoffs 2 über eine Ableitung 23 in einen Sammelbehälter 24 befördert wird, wie nachfolgend in Fig. 2 dargestellt. Im Sammelbehälter 24 sammelt sich das Wasser 10 und ein Teil der Inertgase, ein flüssiges Kondensat 25, am Boden und der restliche Teil der Inertgase sowie der Wasserstoff 2, als Gasanteil 26 im oberen Bereich an. Der Wasserstoff 2 bzw. der Gasanteil 26 kann aus dem Sammelbehälter 24 in die Anode 4 der Brennstoffzelle 1 rückgeführt werden. Das Kondensat 25 wird hingegen, wie das Wasser 10 aus der Kathode 5, aus dem Brennstoffzellensystem 20 abgeleitet werden. Dabei werden mit dem Kondensat 25 auch zumindest Teile des Gasanteils 26 abgeleitet bzw. ausgetragen. Aus der Kathode 5 wird aber auch eine so genannte Kathodenabluft, welche bei der Reaktion von Wasserstoff 2 mit Luft gebildet wird, mit dem Wasser 10 ausgetragen. Diese verbrauchten und zum Teil explosionsfähigen Betriebsmedien müssen nun sicher aus dem Brennstoffzellensystem 20 ausgetragen werden, sodass keine Explosionsgefahr mehr besteht. Grundsätzlich erfolgt die Rückführung und Ableitung über Regeleinheiten, welche über eine Regeleinrichtung geregelt werden.

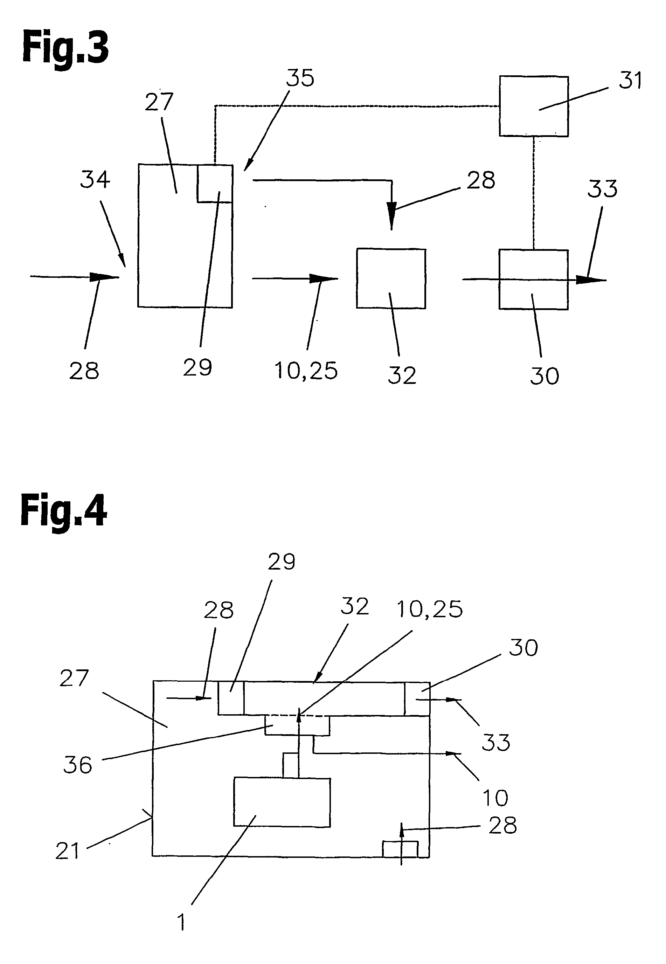

Ein Teil des Brennstoffzellensystems 20 wird durch einen Betriebsraum 27 gebildet, wie in den Fig. 3 bis 5 dargestellt. Im Betriebsraum 27 befinden sich jene Komponenten, welche die explosionsfähigen Teile der Betriebsmedien verarbeiten und die verbrauchten Betriebsmedien austragen. Diese Komponenten sind insbesondere der Stack 12, der Sammelbehälter 24 und das Kühlsystem 13.

Erfindungsgemäß ist nun vorgesehen, dass die explosionsfähigen Teile der verbrauchten Betriebsmedien vor dem Austragen mittels eines Lüfters 29 in einer Mischzone 32 zu einer Abluft 33 vermischt werden, wobei der Wert der Explosionsfähigkeit der Abluft 33 unter einem Grenzwert gehalten wird. Dabei ist die Mischzone 32 durch den Lüfter 29 vom Betriebsraum 27 getrennt. Damit es nun in diesem Betriebsraum 27 zu keinen Ansammlungen von explosionsfähigen Teilen der verbrauchten Betriebsmedien, beispielsweise durch Leckagen, kommt, wird der Betriebsraum 27 mit einem Spülmedium 28 gespült. Dazu wird das Spülmedium 28 vom Lüfter 29 angesaugt und von diesem in die Mischzone 32 ausgeblasen bzw. ausgetragen, sodass die Abluft 33 gemischt werden kann - wie später noch im Detail beschrieben. Anschließend wird die Abluft 33 vom Lüfter 29 über eine Sensoreinheit 30 aus dem Brennstoffzellensystem 20 ausgeblasen. Die Sensoreinheit 30 ist dabei nach dem Lüfter 29 - also auf dessen Druckseite - angeordnet und überprüft die ausgetragene Abluft 33 auf dessen Explosionsfähigkeit. Wird diese überschritten, kann eine Steuervorrichtung 31 aufgrund der Information der Sensoreinheit 30 das Brennstoffzellensystem 20 beispielsweise abschalten oder Schritte zur Senkung der Explosionsfähigkeit veranlassen. Der Lüfter 29 ist vorzugsweise explosionsgeschützt ausgeführt.

In Fig. 3 ist nun schematisch das erfindungsgemäße Verfahren dargestellt, gemäß dem das Spülmedium 28 mit den verbrauchten und zumindest zum Teil explosionsfähigen Betriebsmedien zur Abluft 33 vermischt wird. Der Betriebsraum 27 weist einen Einlass 34 und einen Auslass 35 für das Spülmedium 28' auf. Der Lüfter 29 ist im Auslass 35 des Betriebsraums 27 angeordnet, sodass das Spülmedium 28 vom Einlass 34 angesaugt und beim Auslass 35 ausgeblasen wird. Bevorzugt sind der Einlass 34 und der Auslass 35 derart angeordnet, dass der Betriebsraum 27 im Wesentlichen vollständig mit dem Spülmedium 28 gespült bzw. belüftet werden kann. Beispielsweise kann dies durch eine diagonale Anordnung realisiert werden. Wesentlich ist hierbei, dass der Lüfter 29 einen Abschluss des Betriebsraums 27 darstellt, sodass das durch den Lüfter 29 ausgeblasene Spülmedium 28 nicht zurück in den Betriebsraum 27 gelangen kann. Der Betriebsraum 27 bildet also einen abgeschlossenen Luftraum, welcher von der anderen Seite des Lüfters 29 durch diesen getrennt ist. Somit kann das Spülmedium 28 gegebenenfalls ein Knallgas mitaustragen, welches bei der Ladung von Batterien gebildet wird. Der Ausgleichsbehälter des Kühlsystems 13 kann auch mit dem Spülmedium 28 gespült bzw. belüftet werden, sodass die darin durch Diffusion entstandenen gasförmigen und gegebenenfalls explosionsfähigen Teile sicher abgeführt werden können. Beim Spülen des Betriebsraums 27 werden insbesondere geringe gasförmige Teile der verbrauchten Betriebsmedien, welche explosionsfähig sind und durch Diffusion an mechanischen Verbindungen auftreten können, durch das Spülmedium 28 aufgenommen und ausreichend verdünnt. Somit stellt das mit explosionsfähigen Teilen angereicherte Spülmedium 28 im Normalbetrieb keine Gefahr dar. Auch wird aus dem Betriebsraum 27 das Kondensat 25 - welches einen Anteil des Gasanteils 26 beinhaltet - aus dem Sammelbehälter 24 und das Wasser 10 mit der Kathodenabluft aus der Kathode 5 abgeleitet. Das Kondensat 25 wird dabei im Wesentlichen periodisch aus dem Sammelbehälter 24 ausgetragen, während das Wasser 10 mit der Kathodenabluft im Wesentlichen kontinuierlich ausgetragen wird.

Gemäß der Erfindung werden das Spülmedium 28, das Kondensat 25 und das Wasser 10 mit der Kathodenabluft in die Mischzone 32 geleitet und miteinander vermischt. Dadurch ist in einem Normalbetrieb des Brennstoffzellensystems 20 ein Mischverhältnis zwischen explosionsfähigen Teilen, Spülmedium 28, Kondensat 25 und Kathodenabluft gewährleistet, sodass ein Grenzwert für die Explosionsfähigkeit nicht überschritten wird. Die Effizienz der Vermischung wird dabei im Wesentlichen derart erreicht, dass das Spülmedium 28 von einer anderen Seite als das Kondensat 25 in die Mischzone 32 geleitet wird. Grundsätzlich kann die Vermischung aber auch dadurch beeinflusst werden, wie das Spülmedium 28 bzw. die verbrauchten Betriebsmedien in die Mischzone 32 geleitet werden - beispielsweise durch eine bestimmte Reihenfolge. So kann zuerst das Spülmedium 28, dann das Kondensat 25 und schlussendlich die Kathodenabluft in die Mischzone 32 geleitet werden. Daraus resultiert, dass insbesondere am Ausgang der Mischzone 32 nochmals die Vermischung mit der sauerstoffarmen Kathodenabluft erfolgt. Dabei enthalten die gasförmigen Teile - also das Spülmedium 28 und der Gasanteil 26 des Kondensats 25 - explosionsfähige Teile, wobei die Kathodenabluft sauerstoffarm ist. Somit wird durch die Vermischung erreicht, dass die darin enthaltenen explosionsfähigen Teile aus den verbrauchten Betriebsmedien, insbesondere durch die sauerstoffarme Kathodenabluft derart reduziert werden, dass die in der Mischzone 32 gebildete Abluft 33 ohne weitere Maßnahmen aus dem Brennstoffzellensystem 20 zumindest teilweise durch den Druck des Lüfters 29 ausgetragen bzw. ausgeblasen werden kann.

Im Normalbetrieb der Brennstoffzelle 1 ist im Gasanteil 26 des Kondensats 25 der höchste Anteil explosionsfähiger Teile. Zusätzlich wird der explosionsfähige Anteil des Kondensats 25 periodisch beim so genannten "purgen" erhöht, welches entsprechend in die Mischzone 32 geleitet wird, sodass dabei gegebenenfalls der Grenzwert der Explosionsfähigkeit in der Mischzone 32 überschritten wird. Erfindungsgemäß werden allerdings die explosionsfähigen Teile in der Mischzone 32 zuerst mit der Abluft 33 vermischt und somit deren Explosionsfähigkeit gesenkt, bevor sie aus dem Brennstoffzellensystem 20 ausgetragen werden. Die Mischzone 32 kann auch als Puffer betrachtet werden, durch welchen eine Erhöhung der Explosionsfähigkeit ausgeglichen wird. Dieses Verhalten der Mischzone 32 resultiert im Wesentlichen daraus, dass es in der Mischzone 32 zu Verwirbelungen kommt, aufgrund welcher die Abluft 33 gemischt und anschließend ausgetragen wird. Beim Austragen der Abluft 33 wird diese an der Sensoreinheit 30 vorbeigeführt mit der die Explosionsfähigkeit der Abluft 33 überprüft werden kann. Dies ist für Sicherheitsmaßnahmen, wie beispielsweise den Explosionsschutz, erforderlich. Die Sensoreinheit 30 übermittelt die gemessenen Werte für die Explosionsfähigkeit der Steuervorrichtung 31, welche bei einer Überschreitung des Grenzwertes der Explosionsfähigkeit entsprechende Schritte - wie beispielsweise die Umschaltung in einen "Sicheren Zustand" oder die Abschaltung - durchführt. Ebenso kann die Steuervorrichtung 31 auch den Lüfter 29 derart regeln, dass das,Volumen bzw. die Strömungsgeschwindigkeit des Spülmediums 28 erhöht wird, sodass das erforderliche Mischverhältnis wieder gewährleistet ist, um den Wert der Explosionsfähigkeit der Abluft 33 entsprechend gering zu halten.

Durch das erfindungsgemäße Verfahren kann im Normalbetrieb des Brennstoffzellensystems 20 auch die Explosionsfähigkeit der ausgetragenen Abluft 33 durch die Vermischung in der Mischzone 32 konstant unter dem Grenzwert gehalten werden. Der Normalbetrieb ist im Wesentlichen derart definiert, dass die Brennstoffzelle 1 Strom produziert und keine Undichtheiten bzw. Leckagen vorhanden sind.

In der Mischzone 32 entsteht also durch Vermischung die gasförmige Abluft 33, welche gefahrlos und ohne zusätzliche Maßnahmen, wie einer Verbrennung, aus dem Brennstoffzellensystem 20 ausgetragen werden kann.

In der Mischzone 32 sind auch flüssige Anteile durch das Kondensat 25 und das Wasser 10 vorhanden, welche über zwei unterschiedliche Methoden abgeleitet werden können, welche im Folgenden beschrieben sind.

Bei einer Methode gemäß Fig. 4 ist in der Mischzone 32 ein Abscheider 36 integriert, welcher die flüssigen Anteile direkt von der Mischzone 32 aus dem Brennstoffzellensystem 20 ableitet. Da die flüssigen Anteile schwerer als die gasförmigen sind, sammeln sich diese im unteren Bereich der Mischzone 32 an. Dort ist der Abscheider 36 entsprechend angeordnet, sodass die flüssigen Anteile, wie durch das Wasser 10 symbolisiert, abgeleitet werden können. Bei der Ableitung dieser flüssigen Anteile sind im Wesentlichen keine Sicherheitsmaßnahmen bezüglich der Explosionsfähigkeit erforderlich, da die explosionsfähigen Anteile vernachlässigbar gering sind. Selbstverständlich ist es auch hier möglich, den Abscheider 36 bereits vor der Mischzone 32 anzuordnen, sodass lediglich die gasförmigen Teile in die Mischzone 32 gelangen. Dies kann über einen unter Druck stehenden Abscheider 36 erfolgen, sodass bereits im Abscheider 36 der Gasanteil 26 des Kondensats 25 mit der Kathodenabluft vermischt wird. In diesem Fall wird von einer Vormischung gesprochen Dazu kann die Mischzone 32 beispielsweise derart ausgeführt sein, dass diese in einem Kanal bzw. Rohr integriert ist. Beispielsweise ist der Lüfter 29 an einem Ende des Rohres - welches den Auslass 35 darstellt - angeordnet, und wird das durch das Brennstoffzellensystem 20 angesaugte Spülmedium 28 über das andere Ende des Rohres aus dem Brennstoffzellensystem 20 ausgeblasen bzw. ausgetragen. Die Mischzone 32 ist im Wesentlichen direkt nach dem Lüfter 29 angeordnet und bildet also im Wesentlichen einen Abschnitt des Rohres, sodass die gasförmigen Anteile mit dem kontinuierlichen Strom des Spülmediums 28 vermischt und über die Sensoreinheit 30 ausgeblasen werden.

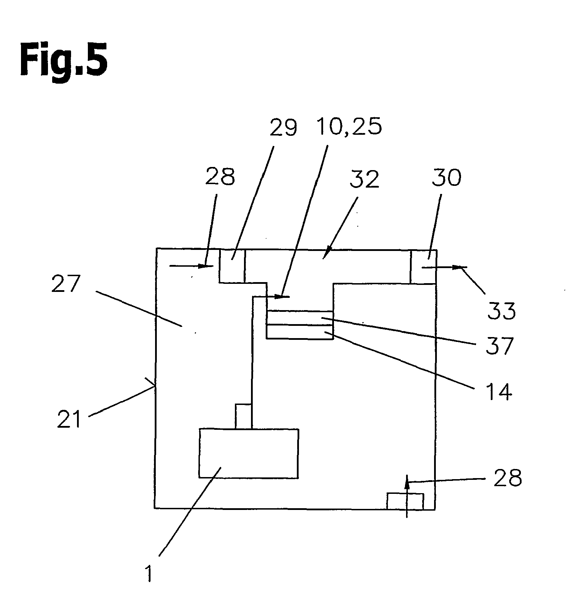

Die erfindungsgemäße Methode gemäß Fig. 5 nutzt zur Ableitung der flüssigen Anteile den Kühler 14 der Brennstoffzelle 1, welcher mit einer thermisch überwachten Verdunstungsvorrichtung 37 ausgebildet ist. Die flüssigen Anteile aus der Mischzone 32 werden auf diese Verdunstungsvorrichtung 37 geleitet und dort verdunstet. Die Verdunstung erfolgt aufgrund der Temperatur des Kühlers 14, welche durch die Kühlung des Stacks 12 über das Kühlsystem 13 erreicht wird. Somit werden die flüssigen Anteile dampfförmig und können mit den gasförmigen Anteilen aus der Mischzone 32 über die Sensoreinheit 30 ausgetragen werden. Dementsprechend können die gasförmigen und die flüssigen Anteile aus der Mischzone 32 gleichzeitig auf die Verdunstungsvorrichtung 37 geleitet und die gasförmigen Anteile aus der Mischzone 32 automatisch über die Sensoreinheit 30 ausgetragen werden. Zusätzlich erfolgt eine weitere Vermischung der dampfförmigen Anteile mit der Abluft 33, bevor die Austragung über die Sensoreinheit 30 erfolgt.

Im Allgemeinen sei noch darauf hingewiesen, dass die Strömungsrichtung im Wesentlichen durch den Lüfter 29 vorgegeben wird. Zusätzlich kann dies allerdings durch die Strömungsrichtung der Kathodenabluft unterstützt werden. Lediglich die Austragung aus dem Sammelbehälter 24 ist davon unabhängig, da dies bevorzugt über eine Druckregelung durchgeführt wird. Grundsätzlich kann der Lüfter 15 des Kühlers 14 auch die Funktion des explosionsgeschützen Lüfters 29 übernehmen. Somit wäre der Lüfter 15 für das Brennstoffzellensystem 20 ausreichend. Am Einlass 34 des Betriebsraums 27 kann eine Messeinrichtung angeordnet sein, welche die Menge des durchströmenden Spülmediums 28 misst. Durch eine derartige Messung wird gewährleistet, dass das Brennstoffzellensystem 20 auch tatsächlich gespült wird, sodass es zu keinen gefährlichen Ansammlungen explosionsfähiger Teile kommen kann. Dazu ist die Messeinrichtung entsprechend mit der Steuervorrichtung 31 verbunden. Somit kann die Gefahr von Ansammlungen explosionsfähiger Teile frühzeitig erkannt und vermieden werden. Dieser Messwert kann als zusätzliche Bedingung für eine allgemein aus dem Stand der Technik bekannte Prozedur zur Inbetriebnahme des Brennstoffzellensystems 20 verwendet werden, wodurch mit Sicherheit keine explosionsfähigen Teile ausgetragen werden. Die Sensoreinheit 30 weist vorzugsweise einen Wasserstoffsensor auf, da das Betriebsmedium Wasserstoff 2 die gefährlichste Quelle darstellt. In diesem Fall ist der Sensor der Sensoreinheit 30 an die Betriebsmedien der Brennstoffzelle 1 angepasst.

Die ausgeblasene Abluft 33 wird vorzugsweise so geführt, dass sie nicht zum Einlass 34 des Spülmediums 28 gelangen kann, was auch durch die Messeinrichtung am Einlass 34 überprüft werden kann. Das Spülmedium 28 kann das Medium einer Frischluftversorgung darstellen, bei welcher in den meisten Fällen die Umgebungsluft herangezogen wird. Dabei kann das Spülmedium 28 auch entsprechend gefiltert werden.

Grundsätzlich befindet sich das Brennstoffzellensystem 20 nicht mehr im Normalzustand, wenn ein Fehler, wie beispielsweise zu hohe Temperatur des Kühlsystems 13 oder des Prozesses, Undichtheit, defekte Ventile (purgen), ein defekter Stack 12 oder Ähnliches auftritt. Derartige Situationen werden von der Sensoreinheit 30 erkannt. Beispielsweise kann auch ein Aufwärtstrend der Explosionsfähigkeit, wenn die Explosionsfähigkeit der Abluft 33 kontinuierlich steigt, erkannt werden.

## Patentansprüche

1. Verfahren zum Austragen verbrauchter und zumindest zum Teil explosionsfähiger Betriebsmedien einer Brennstoffzelle (1) in einem Brennstoffzellensystem (20), wobei die Betriebsmedien aus einem Betriebsraum (27) des Brennstoffzellensystems (20) vor dem Austragen von einer Sensoreinheit (30) auf dessen Explosionsfähigkeit überprüft werden, und das Austragen von einem zwischen dem Betriebsraum (27) und einer Mischzone (32) angeordneten Lüfter (29) durchgeführt wird, und vom Lüfter (29) zur Belüftung ein Spülmedium (28) durch den Betriebsraum (27) gesaugt wird, welches Spülmedium vor dem Austragen mit den Betriebsmedien in der Mischzone (32) zu einer Abluft (33) vermischt und diese Abluft (33) aus der Mischzone (32) ausgetragen wird, **dadurch gekennzeichnet, dass** in der Mischzone (32) ein flüssiger Teil der Betriebsmedien über einen Kühler (14) mit einer thermisch überwachten Verdunstungseinrichtung (37) geleitet und verdunstet wird.

2. Verfahren nach Anspruch 1, **dadurch gekennzeichnet, dass** die Strömung der Abluft (33) von der vom Lüfter (29) geregelten Strömung des Spülmediums (28) bestimmt wird.

3. Verfahren nach Anspruch 1 oder 2, **dadurch gekennzeichnet, dass** der Lüfter (29) in Abhängigkeit der Explosionsfähigkeit der Abluft (33) geregelt wird.

4. Verfahren nach einem der Ansprüche 1 bis 3, **dadurch gekennzeichnet, dass** die verbrauchten Betriebsmedien zumindest aus einem gasförmigen Teil einer Kathodenabluft und einem explosionsfähigen, gasförmigen Teil eines Anodengemischs gebildet werden.

5. Verfahren nach Anspruch 4, **dadurch gekennzeichnet, dass** in der Mischzone (32) der explosionsfähige und gasförmige Teil des Anodengemischs mit dem Spülmedium (28) und der Kathodenabluft zur Abluft (33) vermischt wird.

6. Verfahren nach Anspruch 4 oder 5, **dadurch gekennzeichnet, dass** mit einer periodischen Beimischung des Anodengemischs in der Mischzone (32) die Regelung des Lüfters (29) angepasst wird.

7. Verfahren nach einem der Ansprüche 1 bis 6, **dadurch gekennzeichnet, dass** die Strömung des Spülmediums (28) gemessen wird.

8. Verfahren nach einem der Ansprüche 1 bis 7, **dadurch gekennzeichnet, dass** ein Wert der Explosionsfähigkeit der ausgetragenen Abluft (33) zur Inbetriebnahme des Brennstoffzellensystems (20) herangezogen wird.

9. Verfahren nach einem der Ansprüche 1 bis 8, **dadurch gekennzeichnet, dass** in oder vor der Mischzone (32) ein flüssiger Teil der verbrauchten Betriebsmedien durch einen Abscheider (36) vom gasförmigen Teil der verbrauchten Betriebsmedien getrennt wird und die gasförmigen Teile unabhängig vom Betrieb des Brennstoffzellensystems (20) abgeleitet werden.

10. Verfahren nach Anspruch 9, **dadurch gekennzeichnet, dass** mit den verbrauchten Betriebsmedien in dem vor der Mischzone (32) angeordneten Abscheider (36) eine Vormischung durchgeführt wird und die vorgemischten verbrauchten Betriebsmedien in die Mischzone (32) geleitet werden.

11. Vorrichtung zum Austragen verbrauchter und zumindest zum Teil explosionsfähiger Betriebsmedien einer Brennstoffzelle (1) in einem Brennstoffzellensystem (20), mit einer Sensoreinheit (30) zur Überprüfung der aus einem Betriebsraum (27) ausgetragenen Betriebsmedien auf dessen Explosionsfähigkeit, wobei eine Mischzone (32) zur Vermischung der Betriebsmedien mit einem Spülmedium (28) zu einer Abluft (33) vorgesehen ist, wobei der Betriebsraum (27) durch einen Lüfter (29) abgeschlossen ist, und die Sensoreinheit (30) in Strömungsrichtung der Abluft (33) gesehen hinter der Mischzone (32) angeordnet ist, **dadurch gekennzeichnet, dass** zwischen der Mischzone (32) und der Sensoreinheit (30) ein Kühler (14) mit einer thermisch überwachten Verdunstungseinrichtung (37) angeordnet ist.

12. Vorrichtung nach Anspruch 11, **dadurch gekennzeichnet, dass** die Mischzone (32) in einem Kanal angeordnet ist, wobei an einem als Auslass (35) des Betriebsraumes (27) ausgebildeten Endes des Kanals der Lüfter (29) montiert ist und ein zweites Ende des Kanals zum Austragen der Abluft (33) ausgebildet ist.

## Claims

1. A method for discharging used operating media of a fuel cell (1) in a fuel cell system (20), at least some of which are explosive, wherein the operating media from an operating space (27) of the fuel cell system (20) are examined for explosiveness by a sensor unit (30) prior to discharging, and the discharging is performed by a fan (29) positioned between the operating space (27) and a mixing zone (32), and that a scavenging medium (28) is sucked by the fan (2) through the operating space (27) for ventilation, said scavenging medium (28) being mixed prior to discharging with the operating media in the mixing zone (32) to obtain waste air (33), and that this waste air (33) is discharged from the mixing zone (32), **characterized in that** a liquid portion of the operating media is conducted in the mixing zone (32) across a cooler (14) with a thermally monitored evaporation device (37) and is evaporated.

2. The method according to claim 1, **characterized in that** the flow of the waste air (33) is determined by the flow of the scavenging medium (28) controlled by the fan (29).

3. The method according to claims 1 or 2, **characterized in that** the fan (29) is controlled as a function of the explosiveness of the waste air (33).

4. The method according to any of claims 1 to 3, **characterized in that** the used operating media are formed at least of a gaseous portion of a cathode waste air and an explosive, gaseous portion of an anode mixture.

5. The method according to claim 4, **characterized in that** the explosive and gaseous portion of the anode mixture is mixed in the mixing zone (32) with the scavenging medium (28) and the cathode waste air to obtain the waste air (33).

6. The method according to claims 4 or 5, **characterized in that** the control of the fan (29) is adapted with a periodic addition of the anode mixture in the mixing zone (32).

7. The method according to any of claims 1 to 6, **characterized in that** the flow of the scavenging medium (28) is measured.

8. The method according to any of claims 1 to 7, **characterized in that** a value of the explosiveness of the discharged waste air (33) is referred to for placing the fuel cell system (20) into operation.

9. The method according to any of claims 1 to 8, **characterized in that** a liquid portion of the used operating media is, in or upstream of the mixing zone (32), separated by a separator (36) from the gaseous portion of the used operating media, and that the gaseous portions are discharged independently of the operation of the fuel cell system (20).

10. The method according to claim 9; **characterized in that** a pre-mixing is performed with the used operating media in the separator (36) positioned upstream of the mixing zone (32), and that the pre-mixed used operating media are conducted into the mixing zone (32).

11. A device for discharging used operating media of a fuel cell (1) in a fuel cell system (20), at least some of which are explosive, comprising a sensor unit (30) for examining the operating media discharged from an operating space (27) for explosiveness, wherein a mixing zone (32) is provided for mixing the operating media with a scavenging medium (28) to obtain waste air (33), wherein the operating space (27) is closed by a fan (29), and the sensor unit (30) is disposed downstream of the mixing zone (32), viewed in the flow direction of the waste air (33), **characterized in that** a cooler (14) with a thermally monitored evaporation device (37) is positioned between the mixing zone (32) and the sensor unit (30).

12. The device according to claim 11, **characterized in that** the mixing zone (32) is positioned in a channel, wherein the fan (29) is mounted at an end of the channel which is designed as an outlet (35) of the operating space (27), and a second end of the channel is designed for discharging the waste air (33).

## Revendications

1. Procédé pour évacuer des agents de fonctionnement usés et au moins partiellement explosifs d'une pile à combustible (1) dans un système de piles à combustible (20), les agents de fonctionnement issus d'un espace de fonctionnement (27) du système de piles à combustible (20) étant, avant l'évacuation, soumis à un contrôle par une unité de détection (30) pour vérifier leur caractère explosif, et l'évacuation étant effectuée par un ventilateur (29) disposé entre l'espace de fonctionnement (27) et une zone de mélange (32), et le ventilateur (29) aspirant, pour la ventilation, un agent de balayage (28) à travers l'espace de fonctionnement (27), lequel agent de balayage est, avant l'évacuation, mélangé aux agents de fonctionnement dans la zone de mélange (32) pour obtenir un air d'échappement (33), et cet air d'échappement (33) est évacué hors de la zone de mélange (32), **caractérisé en ce que**, dans la zone de mélange (32), un partie liquide des agents de fonctionnement est, par le biais d'un refroidisseur (14), conduite et évaporée par un dispositif d'évaporation (37) contrôlé thermiquement.

2. Procédé selon la revendication 1, **caractérisé en ce que** l'écoulement de l'air d'échappement (33) est déterminé par l'écoulement de l'agent de balayage (28) régulé par le ventilateur (29).

3. Procédé selon la revendication 1 ou 2, **caractérisé en ce que** le ventilateur (29) est régulé en fonction du caractère explosif de l'air d'échappement (33).

4. Procédé selon l'une quelconque des revendications 1 à 3, **caractérisé en ce que** les agents de fonctionnement usés sont formés d'au moins une partie gazeuse d'un air d'échappement de cathode et d'une partie gazeuse explosive d'un mélange anodique.

5. Procédé selon la revendication 4, **caractérisé en ce que**, dans la zone de mélange (32), la partie explosive et gazeuse du mélange anodique est mélangée à l'agent de balayage (28) et à l'air d'échappement de cathode pour obtenir l'air d'échappement (33).

6. Procédé selon la revendication 4 ou 5, **caractérisé en ce que** la régulation du ventilateur (29) est ajustée par un ajout périodique du mélange anodique dans la zone de mélange (32).

7. Procédé selon l'une quelconque des revendications 1 à 6, caractérisé ce que l'écoulement de l'agent de balayage (28) est mesuré.

8. Procédé selon l'une quelconque des revendications 1 à 7, **caractérisé en ce qu'**une valeur du caractère explosif de l'air d'échappement (33) évacué est utilisée pour la mise en marche du système de piles à combustible (20).

9. Procédé selon l'une quelconque des revendications 1 à 8, **caractérisé en ce que**, dans ou devant la zone de mélange (32), une partie liquide des agents de fonctionnement usés est séparée, par un séparateur (36), de la partie gazeuse des agents de fonctionnement usés, et **en ce que** les parties gazeuses sont évacuées indépendamment du fonctionnement du système de piles à combustible (20).

10. Procédé selon la revendication 9, **caractérisé en ce que**, avec les agents de fonctionnement usés, un prémélange est réalisé dans le séparateur (36) disposé devant la zone de mélange (32), et **en ce que** les agents de fonctionnement usés prémélangés sont conduits dans la zone de mélange (32).

11. Dispositif pour évacuer des agents de fonctionnement usés et au moins partiellement explosifs d'une pile à combustible (1) dans un système de piles à combustible (20), doté d'une unité de détection (30) pour contrôler le caractère explosif des agents de fonctionnement évacués hors d'un espace de fonctionnement (27), une zone de mélange (32) étant prévue pour le mélange des agents de fonctionnement à un agent de balayage (28) pour obtenir un air d'échappement (33), l'espace de fonctionnement (27) étant terminé par un ventilateur (29), et l'unité de détection (30) étant disposée derrière la zone de mélange (32), vu dans la direction d'écoulement de l'air d'échappement (33), **caractérisé en ce qu'**un refroidisseur (14) doté d'un dispositif d'évaporation (37) contrôlé thermiquement est disposé entre la zone de mélange (32) et l'unité de détection (30).

12. Dispositif selon la revendication 11, **caractérisé en ce que** la zone de mélange (32) est disposée dans une gaine, le ventilateur (29) étant monté à une extrémité de la gaine façonnée comme orifice de sortie (35) de l'espace de fonctionnement (27), et une deuxième extrémité de la gaine étant façonnée pour l'évacuation de l'air d'échappement (33).
